# FASCICULE DE BREVET EUROPEEN

(11) **EP 1 063 894 B1**
(45) Date de publication et mention de la délivrance du brevet: **14.08.2002**
(21) Numéro de dépôt: 99909042.6
(22) Date de dépôt: 18.03.1999
(51) Int. Cl.: A23C 9/142, A01J 11/10, B01D 61/14

(54) **PRODUITS, EN PARTICULIER LAITIERS, COMPRENANT DES FRACTIONS SELECTIONNEES DE GLOBULES GRAS, OBTENTION ET APPLICATIONS**
PRODUKTE, INSBESONDERE MILCHPRODUKTE, ENTHALTEND AUSGEWÄHLTE FRAKTIONEN VON FETTZELLEN, HERSTELLUNGSVERFAHREN UND ANWENDUNGEN
PRODUCTS, IN PARTICULAR MILK PRODUCTS, COMPRISING SELECTED FRACTIONS OF FAT GLOBULES, METHOD FOR OBTAINING SAME AND USE

(30) Priorité: 20.03.1998 FR 9803478
(43) Date de publication de la demande: 03.01.2001
(73) Titulaire: INSTITUT NATIONAL DE LA RECHERCHE AGRONOMIQUE (INRA), 75338 Paris Cédex 07 (FR)
(72) Inventeur: GOUDEDRANCHE, Henri, Yves, Marie, F-35740 Pacé (FR); MAUBOIS, Jean-Louis, Joseph, F-35740 Pacé (FR); FAUQUANT, Jacques, Emile, F-35160 Pleumeleuc (FR)
(74) Mandataire: Michelet, Alain
(86) Numéro de dépôt international: FR9900632
(87) Numéro de publication internationale: WO9948376

(56) Documents cités:
- DE-A- 3 743 440
- FR-A- 2 692 441
- FR-A- 2 731 587
- US-A- 4 140 806

## Description

La présente invention concerne de nouveaux produits présentant des caractéristiques originales de distribution de globules gras, l'obtention de ces produits et leurs applications. Le domaine préféré de l'invention est celui des produits laitiers.

Plus particulièrement l'invention est relative à un procédé permettant de séparer de manière sélective, selon leur taille sans modifier de manière significative leur intégrité membranaire, les globules gras contenus dans un milieu alimentaire ou biologique. Dans ce qui suit, l'invention a été décrite de manière détaillée en référence au traitement du lait. Celui-ci constitue, en effet, un cas particulièrement intéressant de liquide alimentaire pouvant être soumis au procédé.

La matière grasse contenue dans le lait produit par les mammifères (vache, chèvre, brebis, bufflesse, jument, ânesse, femme ...) est à plus de 95% sous forme de globules sphériques, visibles au microscope optique, ayant un diamètre variant entre 0,1 et 20 µm. Pour ce qui est du lait de vache, leur diamètre moyen se situe entre 3 et 5 µm et leur dispersion gaussienne est majoritairement comprise entre 2 et 12 µm (Alais, 1984, Science du Lait, Edition Sepaic). Les globules gras les plus nombreux (80%) ont un diamètre inférieur à 0,1 µm, mais ils ne représentent qu'une très faible proportion en poids de la matière grasse laitière (Keenan et al., 1988, Fundamentals of Dairy Chemistry, Edition Van Nostrand Reinhold). La distribution de taille des globules gras du lait varie légèrement avec la race, l'alimentation et le stade de lactation du bovin laitier (Keenan et al., cité supra).

Les globules gras du lait de vache sont constitués d'une membrane à structure complexe comprenant de nombreuses espèces protéiques (20 à 40 selon les auteurs) à propriétés amphiphiles, comme la butyrophiline ou enzymatiques, comme la xantine oxydase, des lipides complexes (phospholipides et cerébrosides dont certains présentent aussi des glycations complexes, notamment acide sialique, N-acétyl-galactosamine...) et des acides nucléiques (Keenan et al., cité supra) entourant une gouttelette de di-et de triglycérides, partiellement cristallisés à température ambiante (Alais, cité supra).

La séparation des globules gras du reste du lait, phénomène dit de l'écrémage est basée sur la différence de masse volumique (densité) existant entre les globules et le liquide dans lequel ils sont suspendus. On distingue classiquement deux types d'écrémage ; l'écrémage dit spontané, autrefois très pratiqué en beurrerie et en fromagerie artisanales, fournissant une couche enrichie en globules gras agglutinés, opération réalisée à 5-10°C pendant 10-16 h et l'écrémage centrifuge où le lait entier soumis à une rotation centrifuge de l'ordre de 4000 à 5000 t/min, au sein d'un empilement de disques coniques (Towler, 1986, Modem Dairy Technology, Edition Robinson) est séparé, en continu, en crème et lait écrémé. La crème, obtenue selon ce procédé, d'usage généralisé dans l'industrie laitière mondiale, est un lait fortement enrichi en matière grasse globulaire (sa teneur la plus courante est de 400 g/kg). Selon l'efficacité de l'équipement utilisé, la teneur en matière grasse du lait écrémé est égale ou inférieure à 0,5 g/kg.

Il existe un besoin en produits, en particulier laitiers, comprenant des fractions sélectionnées de globules gras, ainsi qu'en produits contenant des globules gras calibrés. L'industrie laitière recherche de plus en plus des produits nouveaux répondant aux besoins des consommateurs, et parmi eux, des produits provenant de la transformation des produits gras.

L'objet de la présente invention concerne une nouvelle méthodologie de séparation et de fractionnement à l'aide de membranes de microfiltration de la matière grasse contenue dans un milieu alimentaire ou biologique, en particulier dans le lait produit par les femelles laitières, basée non pas sur des différences de masses volumiques entre globules gras et lait écrémé comme dans l'art antérieur, mais sur des différences de tailles particulaires des éléments constitutifs du lait des mammifères.

Ainsi, l'invention concerne non pas une séparation totale de la matière grasse globulaire, mais un fractionnement différentiel de ladite matière grasse selon la taille des globules en vue d'exploiter les propriétés surprenantes des fractions enrichies en petits et en gros globules.

La technique de microfiltration sur membrane est connue en elle-même et a déjà été proposée dans l'industrie laitière notamment A titre de référence pertinente, on peut citer l'article de J.L. Maubois, intitulé "Current uses and future perspectives of M.F. Technology in the dairy industry", dans Bulletin of the IDF 320, 1997, pages 37 à 40, qui fait le point des connaissances de l'homme du. métier dans ce domaine et cite de nombreuses références bibliographiques.

L'écrémage total du lait entier, c'est-à-dire la rétention totale des globules par microfiltration sur membrane en flux tangentiel a été proposé par Piot et al. (La Technique Laitière N°1016, 1987). La membrane utilisée d'un diamètre moyen de pores de 1,8 µm conduisait à une rétention voisine de 98% de la matière grasse, que les auteurs jugeaient insuffisante par rapport à l'écrémage centrifuge et, pour l'améliorer, ils proposaient l'emploi de membranes de microfiltration à diamètre de pores inférieur.

Cet article ne contient pas d'enseignement sur l'obtention de produits gras contenant des fractions sélectionnées de globules gras et souligne que la technique de microfiltration, bien qu'a priori envisageable pour l'écrémage et l'épuration bactérienne du lait entier cru, soulève de nombreux problèmes techniques non résolus.

Le brevet US 4,140,806 décrit un procédé de séparation du lait par microfiltration tangentielle en une première fraction contenant la presque totalité de la matière grasse contenue dans le produit de départ et en une seconde fraction pratiquement exempte de matière grasse, dans des conditions de filtration ne permettant pas l'obtention d'une pression transmembranaire sensiblement uniforme.

Le brevet allemand DE 37 43 440 décrit un procédé de séparation des constituants solubles et Insolubles du lait consistant à soumettre le lait à une microfiltration tangentielle sur une membrane ayant une taille de pore de 0,1 à 2 µm. Ce document ne contient aucune indication concernant une séparation sélective permettant d'aboutir à des fractions ayant des compositions diverses en globules gras.

Le brevet FR 95.02939 (publication 2.731.587) décrit un procédé pour éliminer les cellules somatiques des milieux alimentaires ou biologiques, consistant à soumettre le milieu à traiter à au moins une microfiltration tangentielle sur une membrane ayant un seuil de coupure supérieur à 10 µm, de préférence compris entre 10 et 50 µm. Une application préférée de ce procédé est le traitement du lait, le problème technique dans ce cas étant d'obtenir un lait répondant aux exigences les plus sévères de qualité sanitaire, c'est-à-dire dont le taux de cellules somatiques est très faible, tout en conservant la flore banale utile dans la transformation du lait, par exemple en fromage. Ce brevet antérieur ne se préoccupe que des problèmes liés à la présence des cellules somatiques du lait et ne contient aucun enseignement sur l'obtention de produits gras contenant des fractions sélectionnées de globules gras.

Les produits obtenus selon ce brevet sont un microfiltrat contenant moins de 10 000 cellules somatiques/ml et contenant l'essentiel de la matière grasse du lait de départ ainsi qu'un rétentat représentant 4% en volume du lait mis en contact avec la membrane et contenant l'essentiel des cellules somatiques et un peu de matière grasse.

La présente invention a pour objet un procédé qui permet de séparer d'une manière sélective les globules gras selon leur taille et ainsi de préparer des dérivés contenant des globules calibrés. Ceux-ci restent dans leur état natif, ce qui veut dire que leur membrane n'a pas été modifiée et qu'elle conserve ses propriétés naturelles.

L'invention a pour objet un procédé pour séparer de manière sélective, selon leur taille, les globules gras présents dans un milieu alimentaire ou biologique consistant à soumettre le milieu à traiter à au moins une microfiltration tangentielle sur membrane ayant un seuil de coupure compris entre 1,8 et 10 µm dans des conditions de pression transmembranaire sensiblement uniforme et à récupérer le rétentat et le perméat obtenus.

Dans le cas du lait, les produits obtenus sont utilisés pour la préparation de laits et de crèmes entrant dans les procédés conventionnels de transformation ou dans des procédés nouveaux.

La séparation sélective s'effectue sur membrane de microfiltration ayant des seuils de coupure se situant entre 1,8 µm et 10 µm selon la sélection recherchée. Les exemples illustratifs qui suivent montrent l'intérêt de la sélection des membranes ayant un seuil de coupure supérieur à 1,8 µm et inférieur à 10 µm. Bien que le traitement de microfiltration tangentielle soit possible techniquement en dehors de cette fourchette, il conduit, en particulier dans le cas du lait, à des produits laitiers moins intéressants pour leur transformation ultérieure. Ainsi, avec des membranes ayant des tailles de pores de 0,8 µm et 1,4 µm, la teneur en matière grasse du perméat est faible (respectivement 5,6 g/kg et 2,4 g / kg). Une membrane de 12 µm de diamètre de pores conduit à une séparation de très gros globules gras.

L'invention trouve une application privilégiée pour fractionner la matière grasse globulaire contenue dans le lait entier ou dans la crème résultant de l'écrémage du lait entier.

Selon les matières premières de départ, l'invention permet donc d'obtenir des produits laitiers nouveaux se distinguant de ceux de l'art antérieur par leur répartition de globules gras.

L'invention concerne notamment les produits laitiers ci-après, les deux premiers étant recueillis sous forme de perméat et le dernier sous forme de rétentat :
(i) Produit laitier ayant une teneur en matière grasse totale inférieure ou égale à 400 g/Kg et dont la répartition des globules gras est telle que les globules de diamètre inférieur à 2,0 µm représentent 10 à 60%, préférablement 20 à 40% en poids de la matière grasse totale et les globules gras de diamètre supérieur à 6 µm représentent 10 à 30%, préférablement 15 à 20% en poids de la matière grasse totale.
(ii) Produit laitier ayant une teneur en matière grasse totale inférieure ou égale à 400 g/Kg et dont la répartition des globules gras est telle que les globules gras de diamètre inférieur à 3,0 µm représentent 20 à 90% et préférablement 30 à 80% en poids de la matière grasse totale et les globules gras de diamètre supérieur à 6 µm représentent 10 à 30% et préférablement 15 à 20% en poids de la matière grasse totale.
(iii) Produit laitier ayant une teneur en matière grasse totale supérieure ou égale à 30 g/kg et dont la répartition est telle que les globules de diamètre inférieur à 5 µm représentent moins de 90% et préférablement moins de 80% en poids de la matière grasse totale et les globules de diamètre supérieur à 6 µm représentent plus de 10% et préférablement plus de 20% en poids de la matière grasse totale.

Dans le procédé de l'invention, on peut utiliser n'importe quel type de membrane, minérale, organique ou composite, à condition que la membrane considérée soit adaptée à l'installation de microfiltration tangentielle mise en oeuvre.

L'homme du métier connaît les caractéristiques générales des installations de microfiltration tangentielle, et, si besoin est, il peut se reporter aux références bibliographiques citées à ce sujet dans l'introduction de la présente description, par exemple l'article de Piot et al. (1987), de J.L. Maubois (1997) et le brevet français publié sous le N°2.731.587.

La mise en oeuvre proprement dite de la microfiltration à courant tangentiel est réalisée dans une installation de type connu. Le produit à traiter est amené par une pompe d'alimentation à circuler en flux tangentiel à travers des canaux constitués des membranes appropriées ou comprenant celles-ci. Une partie du produit, le perméat ou microfiltrat, passe à travers la membrane et est collectée dans une enceinte. Le milieu qui ne passe pas à travers la membrane, ou rétentat, est recyclé vers la pompe de circulation et mélangé au produit entrant pour de nouveau être soumis à la microfiltration. Dans la pratique, les installations se présentent donc sous forme d'un système en boucle. De telles boucles peuvent être reliées en parallèle pour constituer des installations de plus grande capacité. Un exemple convenable de ce type d'installation est l'unité de microfiltration MFS de la société Alfa Laval.

Le procédé de l'invention se prête à une mise en oeuvre continue ou discontinue. Dans ce dernier cas, une quantité déterminée du milieu à traiter est mise en contact avec les membranes de l'unité de microfiltration jusqu'à l'obtention d'un perméat et d'un rétentat ayant les propriétés désirées. Mais les installations de microfiltration tangentielle se prêtent aussi à une mise en oeuvre continue, selon laquelle le milieu à traiter est amené au contact des membranes de manière continue, les conditions de marche de l'installation étant choisies pour permettre de recueillir, également en continu, un perméat et un rétentat ayant les propriétés souhaitées. L'homme du métier a à sa disposition les moyens de réglage des unités de microfiltration pour obtenir un tel résultat dans des conditions industrielles.

Pour pouvoir être soumis au procédé de l'invention, il suffit que les milieux à traiter soient pompables, de manière à être amenés en contact tangentiel avec les membranes. Ces milieux peuvent donc être des suspensions ou des liquides. Il peut donc s'agir, comme indiqué précédemment, de milieux biologiques ou de milieux alimentaires, très préférentiellement le lait ou un produit issu du lait, tel que crème ou lactosérum par exemple, ou un mélange contenant un ou plusieurs laits ou un ou plusieurs composants du lait. Le produit laitier mis en contact avec la membrane de microfiltration peut ainsi être une crème obtenue par écrémage centrifuge ou par tout autre moyen.

Le lait peut provenir de n'importe quelle femelle laitière : vache, chèvre, brebis, ânesse, bufflesse, isolément ou en mélange. Le procédé de l'invention est tout spécialement approprié au traitement du lait entier cru.

La mise en oeuvre du procédé pour assurer la sélectivité de la membrane et éviter le colmatage est assurée en respectant des conditions hydrodynamiques appropriées, notamment :
- recirculation du rétentat (produit retenu par la membrane) à une vitesse tangentielle moyenne de 1 à 10 m/s, préférentiellement 4 à 8 m/s;
- recirculation à co-courant du perméat (filtrat traversant la membrane) à la surface externe du support de la membrane filtrante. Le débit de perméat est régulé de manière à obtenir une pression transmembranaire identique et faible (entre 0,2 et 1,0 bars) tout au long de la membrane ;
- alimentation de la boucle de filtration à une pression suffisante pour permettre le bon déroulement de la filtration ;
- température : 37 à 55°C. La mise en oeuvre peut également s'effectuer à d'autres températures sous réserve que le produit reste pompable et qu'il ne soit pas altéré par le traitement thermique.

La recirculation à co-courant du perméat représente un premier mode de réalisation du procédé selon l'invention permettant l'obtention d'une pression transmembranaire substantiellement uniforme sur l'ensemble de la surface de la membrane du filtre.

Ainsi, la recirculation à co-courant du perméat à la surface externe du support de la membrane filtrante permet l'obtention d'une perte de charge (différence entre la pression d'entrée et la pression de sortie des fluides circulant de chaque côté de la membrane filtrante) identique dans chacun des compartiments du filtre et donc une différence de pression substantiellement identique en chaque point donné de la membrane filtrante, et ceci sur la totalité de la surface filtrante. La technique de recirculation du perméat à co-courant est par exemple décrite dans le brevet suédois SE 74 16 257 (Sandblom).

L'obtention d'une pression transmembranaire substantiellement uniforme sur la totalité de la surface filtrante constitue l'une des caractéristiques essentielles du procédé de séparation selon l'invention,. pour obtenir la séparation souhaitée des globules selon leur taille.

Selon l'invention, on a trouvé qu'en l'absence d'une pression transmembranaire substantiellement uniforme, la membrane de microfiltration se colmate rapidement (après environ 5 à 20 minutes) et le passage des globules gras ne se fait plus. Cette caractéristique de colmatage du filtre peut constituer un avantage dans des procédés pour lesquels l'obtention d'une fraction pratiquement exempte de globules gras et d'une fraction contenant la quasi-totalité des globules gras du milieu de départ est recherchée.

Au contraire, un défaut de passage des globules gras constituerait un grave inconvénient dans la mise en oeuvre du procédé selon l'invention, car alors la séparation sélective des globules gras selon leur taille ne serait plus possible.

Les globules gras doivent conserver leur taille originelle, c'est-à-dire ni être divisés, ni subir de coalescence par des effets mécaniques inhérents au procédé, par exemple dûs au pompage (nature et type de pompe, vitesse de rotation ...), à la circulation (géométrie des circuits ...), à l'extraction du rétentat et du perméat (vannes, pompes ...) ou à la pression appliquée.

Comme mentionné ci-dessus, la mise en oeuvre du procédé peut se faire en discontinu ou en continu, mais on préfère travailler en continu pour éviter les phénomènes d'homogénéisation et/ou de coalescence des globules gras. Un volume minimal des boucles de circulation du rétentat et du perméat est souhaitable pour limiter au maximum les temps de séjour et, par conséquent, la durée des effets mécaniques sur les produits dans l'installation de microfiltration.

Lorsqu'on pratique la recirculation du perméat à co-courant et qu'on désire assurer une pression transmembranaire uniforme, on a obtenu les meilleurs résultats avec des membranes minérales ou céramiques, telles que celles en alumine alpha, mises sur le marché par la Société des Céramiques Techniques (France), sous la marque Membralox, ou par la Société Orelis France sous la marque KERASEP, ou encore les membranes de marque STERILOX (voir article de J.L. Maubois, 1997, cité supra).

Selon un autre aspect, la membrane filtrante est placée sur un support macroporeux à gradient longitudinal de perméabilité. Un tel support possède une constitution telle qu'il comporte un gradient de porosité qui décroît d'une extrémité à l'autre de la membrane filtrante.

Grâce à un tel support de filtre, la résistance hydraulique décroît d'une extrémité à l'autre de la membrane filtrante, ce qui permet l'obtention d'une pression transmembranaire uniforme, tout au long du chemin membranaire.

Un tel type de filtre est avantageusement réalisé à partir de céramique, tel que le support de filtre décrit dans la demande de brevet français n° FR 97 04 359.

Le procédé de l'invention implique au moins une microfiltration avec une membrane possédant un seuil de coupure entre 1,8 et 10 µm, ce qui signifie que le procédé peut être mis en oeuvre avec une seule membrane de microfiltration répondant à cette définition ou bien en cascade, c'est-à-dire qu'il peut être pratiqué deux ou plusieurs microfiltrations successives à des seuils de coupure différents situés dans la gamme de 1,8 à 10 µm, en vue de sélectionner une population de globules gras.

Egalement, ainsi qu'il est connu dans la technique de microfiltration, le milieu contenant les globules gras peut être modifié en cours de microfiltration par diafiltration, auquel cas le milieu en cours de microfiltration ou le rétentat correspondant est additionné d'un autre milieu ou solution, par exemple de lait écrémé, de perméat d'ultrafiltration de lait, de perméat de microfiltration de lait ou d'eau.

L'invention permet notamment d'obtenir :
(a) des perméats de composition correspondant à des laits de fabrication pour la transformation :
   - en yaourts, par exemple un perméat contenant 10g/kg de matière grasse ;
   - en laits de consommation, pasteurisés, UHT, par exemple un perméat contenant 17g/kg de matière grasse ;
   - en fromages, par exemple un perméat contenant 17 à 38g/kg de matière grasse ;
   - en crème légère, par exemple un perméat contenant entre 150 et 300 g/kg de matière grasse.
(b) des rétentats, diafiltrés ou non, capables d'être utilisés comme laits de fabrication pour les mêmes produits que ceux indiqués pour les perméats ou comme crêmes susceptibles d'être utilisées après barattage en transformation beurrière.

L'invention sera illustrée sans être aucunement limitée par les exemples qui suivent. Les méthodes de mesure des paramètres et des caractéristiques des produits mentionnés sont celles indiquées dans l'article de M. Piot et al. (1987), cité supra.

### Exemple 1

Du lait entier de grand mélange, issu de la zone de collecte d'une laiterie, était réchauffé à 50°C dans un échangeur à plaques avant d'être versé dans le bac de lancement de l'installation de microfiltration.

Celle-cr était une unité MFS1 Tétra-Laval équipée d'un barreau multicanal SCT Membralox P19-40 ayant des pores de diamètre 5 µm et une surface filtrante de 0,2 m². L'alimentation du système était assuré à partir du bac de lancement, par une pompe centrifuge Alfa-Laval type KH 10-50. La circulation dans la boucle rétentat était obtenue par une pompe volumétrique à lobes (pompe IBEX 53-2H), à débit variable ajusté à 4,0 m³/h, ce qui engendrait une vitesse tangentielle moyenne de 4,6 m/s. La circulation dans la boucle perméat était assurée par une pompe volumétrique à lobes (pompe IBEX 42-2H), à débit variable régulé automatiquement en fonction de la perte de charge créée dans la boucle rétentat. La circulation se faisait à co-courant afin de maintenir une pression transmembranaire uniforme de 480 mbars.

La filtration était réalisée de manière continue et les débits d'extraction du perméat et du rétentat fixés respectivement à 1875 et 208 l/h/m², soit un facteur de concentration de 10.

Dans ces conditions opératoires, la répartition de la matière grasse est celle indiquée au Tableau I.

**Tableau I**

| | Teneur en g/kg | Pourcentage en masse |
|---|---|---|
| Lait | 43,0 | 100 |
| Perméat | 34,0 | 71 |
| Rétentat | 161 | 30 |

### Exemple 2

Cet exemple était réalisé à partir de lait entier cru, de grand mélange, sur la même installation que dans l'Exemple 1.

Les paramètres utilisés étaient les suivants :
- membrane SCT Membralox P19-40 - diamètre de pore 3 µm-surface filtrante 0,2 m² ;
- température : 51°C ;
- débit de circulation du rétentat : 6,2 m³/h
- vitesse tangentielle moyenne du rétentat : 7,2 m/s
- pression transmembranaire : 610 mbars
- débit d'extraction :
   - perméat : 1040 l/h/m²
   - rétentat : 115 l/h/m²
- facteur de concentration : 10

La répartition de la matière grasse était la suivante (Tableau II) :

**Tableau II**

| | Teneur en g/kg | Pourcentage en masse |
|---|---|---|
| Lait | 43,9 | 100 |
| Perméat | 37,0 | 76 |
| Rétentat | 110,0 | 25 |

### Exemple 3

Cet Exemple était réalisé à partir de lait entier, cru, de grand mélange sur la même installation que dans l'Exemple 1.

Les paramètres utilisés étaient les suivants :
- membrane SCT Membralox P19-40 - diamètre de pore 2 µm-surface filtrante 0,2 m² ;
- température : 49°C ;
- débit de circulation du rétentat : 6,6 m³/h
- vitesse tangentielle moyenne : 7,6 m/s
- pression transmembranaire : 570 mbars
- débit d'extraction :
   - perméat : 755 l/h/m²
   - rétentat : 120 l/h/m²
- facteur de concentration : 7,3

La répartition de la matière grasse était la suivante (Tableau III) :

**Tableau III**

| | Teneur en g/kg | Pourcentage en masse |
|---|---|---|
| Lait | 42,9 | 100 |
| Perméat | 17,0 | 34 |
| Rétentat | 196 | 63 |

### Exemple 4

Cet Exemple était réalisé à partir de crème obtenue par écrémage centrifuge sur une installation industrielle à 50°C de lait entier cru de grand mélange. La teneur en matière grasse de la crème (421 g/kg) était ramenée à 200 g/kg par dilution avec du lait écrémé avant microfiltration.

L'installation décrite dans l'Exemple 1 était utilisée avec les paramètres suivants :
- membrane SCT Membralox P19-40 - diamètre de pore 5 µm-surface filtrante 0,2 m² ;
- température : 53°C ;
- débit de circulation du rétentat : 4,3 m³/h
- vitesse tangentielle moyenne : 5 m/s
- pression transmembranaire : 230 mbars
- débit d'extraction :
- perméat : 250 l/h/m²
- rétentat : 250 l/h/m²

- facteur de concentration : 2
La répartition de la matière grasse était la suivante (Tableau IV) :

**Tableau IV**

| | Teneur en g/kg | Pourcentage en masse |
|---|---|---|
| Crème diluée | 200 | 100 |
| Perméat | 150 | 37,5 |
| Rétentat | 249 | 62,2 |

### Exemple 5

Cet Exemple était réalisé à partir de crème obtenue par écrémage centrifuge, sur une installation industrielle, à 50°C de lait entier cru de grand mélange. La teneur en matière grasse de la crème (410 g/kg) était ramenée à 203 g/kg par dilution au lait écrémé avant microfiltration.

L'installation décrite dans l'Exemple 1 était utilisée avec les paramètres suivants :
- membrane SCT Membralox P19-40 - diamètre de pore 2 µm-surface filtrante 0,2 m² ;
- température : 49°C ;
- débit de circulation du rétentat : 4,5 m³/h
- vitesse tangentielle moyenne : 5,1 m/s
- pression transmembranaire : 422 mbars
- débit d'extraction :
- perméat : 256 l/h/m²
- rétentat : 120 l/h/m²

- facteur de concentration : 3,1
La répartition de la matière grasse était la suivante (Tableau V) :

**Tableau V**

| | Teneur en g/kg | Pourcentage en masse |
|---|---|---|
| Crème diluée | 203 | 100 |
| Perméat | 84 | 28 |
| Rétentat | 424 | 67 |

### Exemple 6

Du lait entier cru de grand mélange, réchauffé à 50°C, était versé dans le bac de lancement d'une installation de microfiltration différant de celle des Exemples 1 à 5.

Cette unité MFS1 Tétra-Laval, différait de la première sur les points suivants :
- conduite entièrement manuelle ;
- pompes centrifuges :
   * alimentation : Alfa-Laval GM - 2A/115
   * circulation rétentat : FRISTAM, FP 712
   * circulation perméat : Alfa-Laval GM-2 A/115

Les paramètres utilisés étaient les suivants :
- membrane SCT Membralox P19-40 - diamètre de pore 5 µm-surface filtrante 0,2 m² ;
- température : 50°C ;
- débit de circulation du rétentat : 6 m³/h
- vitesse tangentielle moyenne : 6,9 m/s
- pression transmembranaire : 1750 mbars
- débit d'extraction :
   - perméat : 1750 l/h/m²
   - rétentat : 90 l/h/m²
- facteur de concentration : 20

La répartition de la matière grasse était la suivante (Tableau VI) :

**Tableau VI**

| | Teneur en g/kg | Pourcentage en masse |
|---|---|---|
| Lait | 42,6 | 100 |
| Perméat | 35 | 78 |
| Rétentat | 190 | 22 |

### Exemple 7

Le perméat obtenu par microfiltration sur membrane SCT Membralox P19-40, diamètre de pores 2 µm dans l'Exemple 3 correspondait à un lait de consommation demi-écrémé. En comparaison, un lait témoin était préparé par mélange de lait écrémé et de crème obtenus par écrémage centrifuge d'une partie aliquote du lait entier soumis à la microfiltration. La composition des deux laits était la suivante (Tableau VII) :

**Tableau VII**

| Teneur en g/kg | Lait témoin | Lait microfiltré (perméat) |
|---|---|---|
| EST | 107,9 | 108,4 |
| MG | 16,9 | 17,0 |
| MAT | 35,6 | 35,8 |
| Lactose | 48,8 | 48,8 |

Ces deux laits étaient pasteurisés à 72°C - 15 secondes et immédiatement refroidis à 2°C et conservés 24 heures à cette température.

L'analyse sensorielle a montré que les dégustateurs différenciaient les deux laits par leur texture. Le lait microfiltré était qualifié de plus consistant, plus crémeux, plus long en bouche.

### Exemple 8

Deux laits de fromagerie étaient préparés par mélange de produits de l'Exemple 5 :
- lait témoin : lait écrémé et crème à 410 g/kg de matière grasse ;
- lait microfiltré : lait écrémé et perméat contenant 84 g/kg de matière grasse.

Les laits avaient la composition (en g/kg) suivant (Tableau VIII) :

**TABLEAU VIII**

| | EST | MG | MAT | Lactose |
|---|---|---|---|---|
| Lait témoin | 118 | 28,5 | 35,0 | 48,4 |
| Lait microfiltré | 117 | 28,2 | 34,5 | 48,1 |

Ces deux laits étaient transformés en fromage camembert selon une technologie classique pour l'homme de l'art et dans des conditions rigoureusement identiques :
- pasteurisation à 72°C - 15 secondes
- ensemencement en levains mésophiles EZAL MM 101 (0,02 unité/kg) et Flora Danica (0,08 unité/kg)
- prématuration de 16 heures à 13°C
- réchauffage à 34°C et emprésurage à pH 6,25
- coagulation, découpage, égouttage, retournements avec cinétique de température selon l'usage de l'homme de l'art
- salage par saumurage
- ensemencement de la flore de surface
- affinage :
   10 jours à 13°C
   7 jours à 7°C
   7 jours à 4°C

Au démoulage, la composition des fromages était la suivante (Tableau IX) :

**TABLEAU IX**

| | EST en g/kg | pH |
|---|---|---|
| Fromage témoin | 401 | 4,60 |
| Fromage fabriqué à partir de lait microfiltré | 393 | 4,56 |

L'analyse rhéologique de la texture des fromages par la mesure de la force de pénétration à l'aide d'un appareil STEVENS dans les mêmes conditions opératoires a donné les résultats suivants (moyenne de 20 mesures) (Tableau X) :

**TABLEAU X**

| | Force de pénétration en g | Contrainte tangentielle en Pa |
|---|---|---|
| Fromage témoin | 35,98 | 5838 |
| Fromage fabriqué à partir de lait microfiltré | 31,62 | 5130 |

Ces résultats confirmaient la texture plus molle, plus fine, perçue à la dégustation dans les fromages issus de lait microfiltré.

Après affinage, les dégustateurs différenciaient les fromages issus de lait microfiltré par la texture de la partie non affinée (coeur) jugée moins crayeuse.

### Exemple 9

Deux laits de fromagerie étaient préparés à l'aide des constituants suivants :
- lait témoin : lait cru entier mis en oeuvre dans l'Exemple 3 et lait écrémé obtenu par centrifugation à 35°C de ce même lait.
- lait microfiltré : perméat de l'Exemple 3.

La composition des laits (en g/kg) était la suivante (Tableau XI) :

**TABLEAU XI**

| | EST | MG | MAT | Lactose |
|---|---|---|---|---|
| Lait témoin | 108 | 16,9 | 35,6 | 48,8 |
| Lait microfiltré | 108 | 17,0 | 35,8 | 48,8 |

Ces laits étaient transformés en fromages frais non affinés selon la technologie suivante connue de l'homme de l'art:
- pasteurisation des laits à 72°C - 15 secondes
- ensemencement de 4 kg de chaque lait à 26°C : levains EZAL MM 101 - 0,06 unité/kg
- maturation en salle à 22°C
- après 1h30 de maturation : emprésurage 0,1 ml d'extrait de présure/kg
- après 17 heures de maturation : moulage en moules perforés (1 kg de coagulum par moule) cylindriques de 5,5 cm de diamètre et de 20 cm de hauteur
- égouttage à 22°C pendant 24 heures
- démoulage et refroidissement à 13°C.

Les teneurs en matière sèche des fromages étaient respectivement de 282 g/kg pour le fromage témoin et de 286 g/kg pour le fromage fabriqué avec le lait microfiltré.

L'analyse sensorielle des fromages montrait que la texture du fromage issu de lait microfiltré était plus fine, plus homogène, mieux soudée et moins ferme.

L'analyse rhéologique de la texture des fromages par la mesure de la force de pénétration à l'aide d'un appareil STEVENS dans les mêmes conditions opératoires, démontrait également une différence (résultats : moyenne de 20 mesures), voir tableau XII :

**TABLEAU XII**

| | Force de pénétration en g | Contrainte tangentielle en Pa |
|---|---|---|
| Fromage témoin | 23,0 | 3731 |
| Fromage fabriqué à partirde lait microfiltré | 18,9 | 3073 |

### Exemple 10 (comparaison)

Cet exemple était réalisé à partir de lait entier cru de grand mélange sur la même installation que dans l'Exemple 1.

Les paramètres utilisés étaient les suivants :
- membrane SCT Stérilox P19-40 - diamètre de pore 1,4 µm-surface filtrante 0,2 m² ;
- température : 50°C ;
- débit de circulation du rétentat : 6,6 m³/h
- vitesse tangentielle moyenne : 7,6 m/s
- pression transmembranaire : 500 mbars
- débit d'extraction : - perméat : 275 l/h/m²
- rétentat : 69 l/h/m²
- facteur de concentration : 5

La répartition de la matière grasse était la suivante (Tableau XIII) :

**Tableau XIII**

| | Teneur en g/kg | Pourcentage en masse |
|---|---|---|
| Lait | 44,8 | 100 |
| Perméat | 5,6 | 10 |
| Rétentat | 214 | 95 |

### Exemple 11 (comparaison)

Cet Exemple était réalisé à partir de lait entier cru de grand mélange sur la même installation que dans l'Exemple 1.

Les paramètres utilisés étaient les suivants :
- membrane SCT Stérilox P19-40 - diamètre de pore 0,8 µm-surface filtrante 0,2 m² ;
- température : 50°C ;
- débit de circulation du rétentat : 6,6 m³/h
- vitesse tangentielle moyenne : 7,6 m/s
- pression transmembranaire : 600 mbars
- débit d'extraction :
   - perméat : 285 l/h/m²
   - rétentat : 71 l/h/m²
- facteur de concentration : 5

La répartition de la matière grasse était la suivante (Tableau XIV) :

**Tableau XIV**

| | Teneur en g/kg | Pourcentage en masse |
|---|---|---|
| Lait | 44,8 | 100 |
| Perméat | 2,4 | 4 |
| Rétentat | 224 | 100 |

### Exemple 12 (comparaison)

Cet Exemple était réalisé à partir de lait de chèvre entier cru de grand mélange sur la même installation que dans l'Exemple 1.

Les paramètres utilisés étaient les suivants :
- membrane SCT Membralox P19-40 - diamètre de pore 12 µm-surface filtrante 0,2 m² ;
- température : 50°C ;
- débit de circulation du rétentat : 5,4 m³/h
- vitesse tangentielle moyenne : 6,3 m/s
- pression transmembranaire : 320 mbars
- débit d'extraction :
   - perméat : 750 l/h/m²
   - rétentat : 83 l/h/m²
- facteur de concentration : 10

La répartition de la matière grasse était la suivante (Tableau XV) :

**Tableau XV**

| | Teneur en g/kg | Pourcentage en masse |
|---|---|---|
| Lait | 37,1 | 100 |
| Perméat | 24,4 | 59 |
| Rétentat | 149 | 40 |

Les exemples rapportés ci-dessus illustrent les effets surprenants sur la texture des produits laitiers préparés à partir de perméats de microfiltration enrichis différentiellement en globules gras de petite taille par rapport au lait mis en contact avec la membrane de microfiltration. Cet enrichissement multiplie les propriétés d'interactions des globules avec les autres composants du lait.

Grâce à l'invention, l'industrie laitière dispose d'un procédé de fractionnement industrialisable de la matière grasse laitière globulaire. C'est une nouvelle et large voie de diversification qui est offerte ainsi aux technologues laitiers pour la transformation des produits gras. Les fractions enrichies et appauvries en globules gras de petite taille sont à même de conduire à :
- des fromages de toute catégorie, de texture différente et de flaveur différente, de nombreux enzymes étant localisés dans la membrane des globules gras ;
- des beurres, des crèmes de texture et de flaveur différenciées avec des co-produits (babeurre, lait écrémé) différenciés ;
- des laits fermentés de texture et de flaveur différenciées ;
- des poudres grasses de lait à conservation différenciée et à texture et flaveur différenciées après reconstitution.

L'invention trouve donc une très large application dans la transformation laitière.

### Exemple 13

Cet exemple était réalisé à partir de lait entier enrichi en crème sur la même installation que dans l'exemple 1.

Les paramètres utilisés étaient les suivants:
- membrane SCT Membralex P19-40- diamètre de pore 2 µm-surface filtrante 0,2 m²,
- température 50°C
- Débit de circulation du rétentat: 5,6 m³/h
- vitesse tangentielle moyenne du rétentat: 6,5 m/s
- pression transmembranaire : 550 mbars
- débits d'extraction:
   - perméat : 355 l/h/m²
   - rétentat 89 l/h/m²
- facteur de concentration: 5

La répartition de la matière grasse était la suivante:

**TABLEAU XVI**

| | Teneur en g/kg | Pourcentage en masse |
|---|---|---|
| Lait | 88 | 100 |
| Perméat | 45 | 40 |
| Rétentat | 280 | 63 |

Les fractions de perméat et de rétentat étaient concentrées en matière grasse par centrifugation au moyen d'une écrêmeuse classique. De même, une partie du mélange de lait entier et de crème soumis à la microfiltration était transformée en crème (crème témoin). Les teneurs en matière grasse des 3 crèmes étaient ajustées à 340 g/kg.

Elles subissaient un traitement thermique à 75°C pendant 20 secondes.

Elles étaient refroidies à 4°C pendant 3 h 30 puis réchauffées à 18°C et ensemencées par des levains lactiques (EZAL MM 100 et MD 099). Elles subissaient une maturation à cette température jusqu'à atteindre un pH de 5,15.

Elles étaient alors refroidies et barattées à 12°C ( marque Elecrem 30).

Les beurres obtenus avaient la composition suivante:

**TABLEAU XVII**

| Teneurs en g/kg | | | | | |
|---|---|---|---|---|---|
| Beurre | EST | MG | EAU | MS NON GRAS | NaCI |
| Témoin | 860 | 851 | 123 | 26 | 10,3 |
| Perméat | 882 | 872 | 104 | 24,5 | 8,9 |
| Rétentat | 865 | 850 | 120 | 29 | 10,8 |

Dégustation préliminaire:
- Le beurre de perméat était graisseux, peu fondant et très différent du beurre témoin.
- Le beurre de rétentat était fondant et très similaire au beurre témoin.

## Revendications

1. Procédé pour séparer de manière sélective, selon leur taille, les globules gras présents dans un milieu alimentaire ou biologique, consistant à soumettre le milieu à traiter à au moins une microfiltration tangentielle sur membrane ayant un seuil de coupure compris entre 1,8 et 10 µm dans des conditions de pression transmembranaire sensiblement uniforme et à récupérer le rétentat et le perméat obtenus, les conditions de pression transmembranaire sensiblement uniformes étant obtenues :
- soit par recirculation à co-courant du perméat de microfiltration;
- soit en plaçant la membrane filtrante sur un support macroporeux à gradient longitudinal de porosité

2. Procédé selon la revendication 1, **caractérisé en ce qu'**on utilise une membrane minérale, organique ou composite, adaptée à l'installation de microfiltration tangentielle mise en oeuvre.

3. Procédé selon l'une quelconque des revendications 1 ou 2, **caractérisé en ce qu'**on met en oeuvre le procédé en discontinu ou en continu, ce dernier mode de réalisation étant préféré.

4. Procédé selon l'une quelconque des revendications 1 à 3, **caractérisé en ce que**, à titre de milieu alimentaire, on traite le lait ou un produit issu du lait, tel que crème ou lactosérum, ou un mélange contenant un ou plusieurs laits ou un ou plusieurs composants du lait.

5. Procédé selon la revendication 4, **caractérisé en ce qu'**on traite le lait entier cru.

6. Procédé selon l'une quelconque des revendications 1 à 5, **caractérisé en ce qu'**on met en oeuvre le procédé en utilisant une seule membrane de microfiltration ou bien en cascade, c'est à-dire en pratiquant deux ou plusieurs microfiltrations successives à des seuils de coupure différents, choisis dans la gamme de 1,8 à 10 µm, en vue de sélectionner une population de globules gras.

7. Procédé selon l'une quelconque des revendications 1 à 6, **caractérisé en ce que** le milieu contenant les globules gras est modifié en cours de microfütration par diafiltration, auquel cas le milieu en cours de microfiltration ou le rétentat correspondant est additionné d'un autre milieu ou solution, par exemple de lait écrémé, de perméat d'ultrafiltration de lait, de perméat de microfiltration de lait ou d'eau.

8. Produits, à savoir perméats et rétentats, en particulier produits laitiers, contenant des globules gras de distribution sélectionnée, tels qu'obtenus par le procédé selon l'une quelconque des revendications 1 à 7.

9. Produit laitier ayant une teneur en matière grasse totale inférieure ou égale à 400 g/Kg et dont la répartition des globules gras est telle que les globules de diamètre inférieur à 2,0 µm représentent 10 à 60%, préférablement 20 à 40% en poids de la matière grasse totale et les globules gras de diamètre supérieur à 6 µm représentent 10 à 30%, préférablement 15 à 20% en poids de la matière grasse totale.

10. Produit laitier ayant une teneur en matière grasse totale inférieure ou égale à 400 g/Kg et dont la répartition des globules gras est telle que les globules gras de diamètre inférieur à 3,0 µm représentent 20 à 90% et préférablement 30 à 80% en poids de la matière grasse totale et les globules gras de diamètre supérieur à 6 µm représentent 10 à 30% et préférablement 15 à 20% en poids de la matiére grasse totale.

11. Produit laitier ayant une teneur en matière grasse totale supérieure ou égale à 30 g/kg et dont la répartition est telle que les globules de diamètre inférieur à 5 µm représentent moins de 90% et préférablement moins de 80% en poids de la matière grasse totale et les globules de diamètre supérieur à 6 µm représentent plus de 10% et préférablement plus de 20% en poids de la matière grasse totale.

12. Applications des produits selon l'une quelconque des revendications 8 à 11 dans le domaine laitier, en particulier pour la transformation fromagère.

13. Applications des produits perméats selon l'une des revendications 8 à 11 de composition correspondant à des laits de fabrication pour la transformation en yaourts, en laits de consommation, en fromages ou en crème légère.

14. Applications des produits rétentats selon la revendication 8, diafiltrés ou non, capables d'être utilisés comme laits de fabrication pour la transformation en yaourts , en laits de consommation, en fromages, en crèmes légères, ou comme crèmes susceptibles d'être utilisées après barattage en transformation beurrière.

## Patentansprüche

1. Verfahren zum selektiven Trennen von Fettkügelchen gemäß ihrer Größe, die in einem Nahrungsmittelmilieu oder biologischen Milieu vorhanden sind, wobei das Verfahren darin besteht, das zu behandelnde Milieu zumindest einer tangentialen Mikrofilterung auf einer Membran zu unterziehen, die eine Schnittschwelle aufweist, die zwischen 1,8 und 10 um liegt, unter transmembranen Druckbedingungen, die im wesentlichen gleichmäßig sind, und darin, das erhaltene Retentat und Permeat wiederzugewinnen, wobei die im wesentlichen gleichmäßigen transmembranen Druckbedingungen
- entweder durch Wiedereinbringen des Permeats der Mikrofiltrierung in den Filtrierfluß in Flußrichtung
- oder durch Anordnen der Filtermembran auf einem makroporösen Träger mit längsgerichtetem Porositätsgradienten
erhalten werden.

2. Verfahren nach Anspruch 1, **dadurch gekennzeichnet, daß** eine mineralische, organische oder zusammengesetzte Membran verwendet wird, die für die Durchführung der angewandten tangentialen Mikrofiltrierung geeignet ist.

3. Verfahren nach einem der Ansprüche 1 oder 2, **dadurch gekennzeichnet, daß** das Verfahren diskontinuierlich oder kontinuierlich umgesetzt wird, wobei letzterer Ausführungsmodus bevorzugt wird.

4. Verfahren nach einem der Ansprüche 1 bis 3, **dadurch gekennzeichnet, daß** im Falle eines Nahrungsmittelmilieus Milch oder ein Milchprodukt wie Rahm oder Molke oder eine Mischung, die eine oder mehrere Milcharten oder eine oder mehrere Milchbestandteile enthält, behandelt wird.

5. Verfahren nach Anspruch 4, **dadurch gekennzeichnet, daß** die rohe Vollmilch behandelt wird.

6. Verfahren nach einem der Ansprüche 1 bis 5, **dadurch gekennzeichnet, daß** das Verfahren unter Anwendung einer einzelnen Mikrofiltrierungsmembran oder in Reihenanordnung umgesetzt wird, das heißt, indem zwei oder mehrere aufeinanderfolgende Mikrofiltrierungen mit unterschiedlichen Schnittschwellen, die im Bereich von 1,8 bis 10 µm ausgewählt werden, mit dem Ziel, eine Population von Fettkügelchen auszuwählen, durchgeführt werden.

7. Verfahren nach einem der Ansprüche 1 bis 6, **dadurch gekennzeichnet, daß** das Milieu, das die Fettkügelchen enthält, im Laufe der Mikrofiltrierung durch Diafiltrierung geändert wird, wobei in diesem Fall dem Milieu im Laufe der Mikrofiltrierung oder dem entsprechenden Retentat ein anderes Milieu oder eine Lösung hinzugefügt wird, zum Beispiel entrahmte Milch, Milchultrafiltrierungspermeat, Milchmikrofiltrierungspermeat oder Wasser.

8. Produkte, nämlich Permeate und Retentate, insbesondere Milchprodukte, die Fettkügelchen mit ausgewählter Verteilung enthalten, so wie jene, die durch das Verfahren nach einem der Ansprüche 1 bis 7 erhalten werden.

9. Milchprodukt mit einem Gesamtfettgehalt, der kleiner oder gleich 400 g/kg ist, und bei dem die Aufteilung der Fettkügelchen so erfolgt, daß die Kügelchen mit einem Durchmesser unter 2,0 µm 10 bis 60 Gewichtsprozent, vorzugsweise 20 bis 40 Gewichtsprozent, des Gesamtfetts ausmachen und die Fettkügelchen mit einem Durchmesser über 6 µm 10 bis 30 Gewichtsprozent, vorzugsweise 15 bis 20 Gewichtsprozent, des Gesamtfetts ausmachen.

10. Milchprodukt mit einem Gesamtfettgehalt, der kleiner oder gleich 400 g/kg ist, und bei dem die Aufteilung der Fettkügelchen so erfolgt, daß die Fettkügelchen mit einem Durchmesser unter 3,0 µm 20 bis 90 Gewichtsprozent und vorzugsweise 30 bis 80 Gewichtsprozent des Gesamtfetts und die Fettkügelchen mit einem Durchmesser über 6 µm 10 bis 30 Gewichtsprozent und vorzugsweise 15 bis 20 Gewichtsprozent des Gesamtfetts ausmachen.

11. Milchprodukt mit einem Gesamtfettgehalt, der größer oder gleich 30 g/kg ist, und bei dem die Aufteilung der Fettkügelchen so erfolgt, daß die Kügelchen mit einem Durchmesser von weniger als 5 µm weniger als 90 Gewichtsprozent und vorzugsweise weniger als 80 Gewichtsprozent des Gesamtfetts und die Kügelchen mit einem Durchmesser von mehr als 6 µm mehr als 10 Gewichtsprozent und vorzugsweise mehr als 20 Gewichtsprozent des Gesamtfetts ausmachen.

12. Anwendungen der Produkte gemäß einem der Ansprüche 8 bis 11 im Milchbereich, insbesondere für die Umwandlung in Käse.

13. Anwendungen von Permeaten nach einem der Ansprüche 8 bis 11, deren Zusammensetzung derjenigen von Erzeugungsmilcharten für die Umwandlung in Joghurte, in Trinkmilch, in Käse oder in leichten Rahm entspricht.

14. Anwendungen von diafiltrierten oder nicht diafiltrierten Retentaten nach Anspruch 8, die für die Umwandlung in Joghurte, in Trinkmilch, in Käse, in leichten Rahm oder als Rahmarten, die für eine Verwendung bei der Butterumwandlung nach der Butterung geeignet sind, verwendet werden können.

## Claims

1. Method for separating selectively according to their size the fat globules present in a food or biological medium, consisting in subjecting the medium to be treated to at least a tangential micro-filtration on a membrane with a cut-point threshold between 1.8 and 10 µm in substantially uniform transmembrane pressure conditions and recovering the so-obtained retentate and permeate, the substantially uniform transmembrane pressure conditions are obtained :
- either by co-current recycling the microfiltration permeate
- or by arranging the filtering membrane on a macroporous substrate with a porosity longitudinal gradient.

2. Method according to claim 1, **characterized in that** a mineral, organic or composite membrane is used that is adapted to the tangential micro-filtration installation being implemented.

3. Method according to any one of claims 1 or 2, **characterized in that** it is performed batchwise or continuously, this last embodiment being preferred.

4. Method according to any one of claims 1 to 3, **characterized in that** as food medium it is provided treated milk or a dairy product, such as cream or lactoserum, or a mixture containing one or more milks or one or various milk components.

5. Method according to claim 4, **characterized in that** crude whole milk is treated.

6. Method according to any one of claims 1 to 5, **characterized in that** it is carried out by using a single micro-filtration membrane or in cascade, that means by performing two or more successive micro-filtrations at different cut-point thresholds, selected in the range of 1.8 to 10 µm so as to select a fat globule population.

7. Method according to any one of claims 1 to 6, **characterized in that** the fat globule containing medium is modified upon micro-filtration by diafiltration, in which case the medium being micro-filtrated or the corresponding retentate is added with another medium or solution, for example skimmed milk, milk ultra-filtration permeate, milk micro-filtration permeate or water.

8. Products, namely permeates and retentates, in particular dairy products, containing fat globules of selected distribution, as obtained by the method according to any one of claims 1 to 7.

9. Dairy product having a total fat content lower than or equal to 400 g/kg and the fat globule distribution of which is such that globules of lower diameter than 2.0 µm represent 10% to 60%, preferably 20% to 40%, by weight of the total fats, and the fat globules of higher diameter than 6 µm represent 10% to 30%, preferably 15% to 20%, by weight of the total fats.

10. Dairy product having a total fat content lower than or equal to 400 g/kg and the fat globule distribution of which is such that fat globules of lower diameter than 3.0 µm represent 20% to 90%, preferably 30% to 80%, by weight of the total fats, and the fat globules of higher diameter than 6 µm represent 10% to 30%, preferably 15% to 20%, by weight of the total fats.

11. Dairy product having a total fat content higher than or equal to 30 g/kg and the fat globule distribution of which is such that globules of lower diameter than 5 µm represent less than 90%, preferably less than 80%, by weight of the total fats, and the fat globules of higher diameter than 6 µm represent more than 10%, preferably more than 20%, by weight of the total fats.

12. Uses of products according to any one of claims 8 to 11 in the dairy field, in particular for cheese conversion.

13. Uses of permeate products according to any one of claims 8 to 11 corresponding to production milk for conversion into yoghurts, into consumption milks, into cheese or into light cream.

14. Uses of retentate products according to claim 8, whether diafiltrated or not, liable to be used as production milks for conversion into yoghurts, consumption milks, cheeses, light creams or creams liable to be used after churning in butter conversion.
